# EUROPÄISCHE PATENTANMELDUNG

(11) **EP 3 032 146 A1**
(43) Veröffentlichungstag der Anmeldung: **15.06.2016**
(21) Anmeldenummer: 15192499.0
(22) Anmeldetag: 02.11.2015
(51) Int. Cl.: F16J 15/06, F16J 15/10, F16L 13/10, F16L 13/11, F16L 21/00

(54) **DICHTUNGSELEMENT**

(30) Priorität: 12.12.2014 DE 202014106004 U
(71) Anmelder: REHAU AG + Co, 95111 Rehau (DE)
(72) Erfinder: Hendel, Roland, 91086 Aurachtal (DE); Sieber, Jürgen, 91074 Herzogenaurach (DE); Leihbecher, Heiko, 90596 Schwanstetten (DE); Roth, Sebastian, 91056 Erlangen (DE)

(57) **Zusammenfassung**

Die vorliegende Erfindung betrifft ein Dichtungselement (1) zur Anordnung an einem Fluidleit- oder -aufnahmeelement (2.1), insbesondere zur Anordnung an einer Verbindungsvorrichtung (4) zur fluiddichten Verbindung eines ersten Fluidleit- oder -aufnahmeelements (2.1) und eines zweiten Fluidleit- oder -aufnahmeelements (2.2), das einen Grundkörper (1.1) mit wenigstens einem Hohlraum (1.2) aufweist, welcher ohne Verbindung nach außen ist, und wobei der Hohlraum (1.2) ein aktivierbares Funktionsmittel (1.3) enthält, das durch einen Aktivierungsprozess von einem ersten Zustand in einem zweiten Zustand überführbar ist, wobei das Volumen des Hohlraums (1.2) während des ersten Zustands des Funktionsmittels (1.3) V1 beträgt, und das Volumen des Hohlraums (1.2) während des zweiten Zustands des Funktionsmittels (1.3) größer als V1 ist und V2 beträgt, so dass der Grundkörper (1.1) zumindest teilweise sein Volumen vergrößert, wodurch sich eine Dichtwirkung wenigstens zwischen dem Grundkörper (1.1) und dem Fluidleit- oder -aufnahmeelement (2.1) einstellt.

## Beschreibung

Die Erfindung betrifft ein Dichtungselement.

Weiterhin betrifft die Erfindung eine Verbindungsvorrichtung mit einem solchen Dichtungselement und ein Rohrsystem, das eine Verbindungsvorrichtung aufweist.

Dichtungselemente werden in großer Zahl und in verschiedenen Ausführungen eingesetzt, um Fluidleit- oder -aufnahmeelemente, wie beispielsweise Rohre, fluiddicht miteinander zu verbinden.

Hierbei kommt es häufig vor, dass die zu verbindenden Rohrenden unterschiedliche Maße aufweisen. Es können beispielsweise produktionsbedingt sehr geringe Maßabweichungen auftreten, andererseits können aber auch Maßabweichungen dadurch auftreten, dass ganz unterschiedliche Rohre mit ähnlichen Durchmessern oder solche mit unterschiedlichen Wandstärken miteinander zu verbinden sind.

Aus dem Stand der Technik sind hierzu eine Vielzahl von Techniken bekannt, eine solche Verbindung fluiddicht herzustellen. So können beispielsweise an die jeweiligen Maße angepasste Dichtungselemente eingesetzt werden, die den Nachteil aufweisen, dass sie nur für die Rohrgrößen anwendbar sind, für die sie hinsichtlich ihrer Durchmesser ausgelegt sind. Andere Techniken bestehen beispielsweise darin, die zu verbindenden Rohre mittels diese umspannenden Gummimanschetten, die mit Metallbändern und Verschraubungen festgezogen sind, zu sichern.

Hier setzt die Erfindung ein, deren Aufgabe es ist, ein Dichtungselement anzugeben, das die vorstehend genannten Nachteile überwindet, in einfacher Weise installierbar ist, ein hohes Maß an Anpassungsfähigkeit für unterschiedliche Abmessungen von Fluidleit- oder -aufnahmeelementen aufweist, die Fluiddichtheit garantiert und kostengünstig herstellbar ist.

Eine weitere Aufgabe der vorliegenden Erfindung ist es, eine Verbindungsvorrichtung anzugeben, die ein solches Dichtungselement umfasst. Schließlich ist es noch eine Aufgabe der Erfindung, ein Rohrsystem anzugeben, welches eine Verbindungsvorrichtung aufweist.

Die Lösung der ersten Aufgabe erfolgt gemäß den Merkmalen des Anspruchs 1.

Es hat sich überraschenderweise gezeigt, dass ein Dichtungselement, das zur Anordnung an einem Fluidleit- oder -aufnahmeelement, insbesondere zur Anordnung an einer Verbindungsvorrichtung zur fluiddichten Verbindung eines ersten Fluidleit- oder -aufnahmeelements und eines zweiten Fluidleit- oder -aufnahmeelements, dient, das einen Grundkörper mit wenigstens einem Hohlraum aufweist, welcher ohne Verbindung nach außen ist, und wobei der Hohlraum ein aktivierbares Funktionsmittel enthält, das durch einen Aktivierungsprozess von einem ersten Zustand in einen zweiten Zustand überführbar ist, wobei das Volumen des Hohlraums während des ersten Zustands des Funktionsmittels V1 beträgt und das Volumen des Hohlraums während des zweiten Zustands des Funktionsmittels größer als V1 ist und V2 beträgt, so dass der Grundkörper zumindest teilweise sein Volumen vergrößert, wodurch sich eine Dichtwirkung wenigstens zwischen dem Körper und dem Fluidleit- oder -aufnahmeelement einstellt, die vorstehend genannte Aufgabe vollumfänglich löst.

Weitere wichtige Merkmale und Vorteile der Erfindung ergeben sich aus den Unteransprüchen, aus den Fig. und aus der zugehörigen Figurenbeschreibung.

Erfindungsgemäß kann also das Dichtungselement durch einen Aktvierungsprozess von einem zunächst nicht dichtenden Zustand in einen dichtenden Zustand versetzt werden, wobei es an einem Fluidleit- oder -aufnahmeelement angeordnet ist und dort nach Aktivierung seine Dichtwirkung entfaltet.

In einer bevorzugten Ausführungsart der vorliegenden Erfindung ist vorgesehen, dass zwei Hohlräume im Grundkörper angeordnet sind, wobei wenigstens ein Hohlraum ein aktivierbares Funktionsmittel enthält.

Das Dichtungselement kann je nach den Anforderungen, die an seine Dichtfunktion gestellt werden, in sehr unterschiedlicher Weise ausgelegt sein. Hierzu kann die Wandstärke des Dichtungselements je nach den herrschenden Anforderungen gewählt werden.

Ebenso ist es möglich, die Anzahl der Hohlräume in dem Grundkörper frei zu wählen, was bedeuten kann, dass zwei, drei, vier oder mehr Hohlräume im Grundkörper angeordnet sind.

Damit kann ein maßgeschneidertes Dichtungselement bereitgestellt werden, welches beispielsweise in besonders bevorzugter Weise geeignet ist, zwei Rohrenden miteinander zu verbinden.

Daneben hat das Dichtungselement auch eine Haltefunktion, indem es das Fluidleit- oder -aufnahmeelement bzw. die zu verbindenden Fluidleit- oder -aufnahmeelemente hält bzw. stützt oder in ihrer Lage fixiert. Auch hierzu kann die Wandstärke des Dichtungselements je nach den herrschenden Anforderungen gewählt werden.

Insgesamt kann bei der vorliegenden Erfindung die Wandstärke des Dichtungselements so gewählt werden, dass die Volumenzunahme des Hohlraums bei der Aktivierung des Funktionsmittels gerichtet eine Dichtfunktion generiert, die zum Fluidleit- oder -aufnahmeelement hin orientiert ist. So kann z. B. die Wandstärke des Dichtungselements, die dem Fluidleit- oder -aufnahmeelement zugewandt ist, geringer sein, als die entsprechend abgewandte Seite. Die durch die Volumenzunahme des Hohlraums ausgelöste Expansion des Dichtungselements wird daher bevorzugt auf der dem Fluidleit- oder -aufnahmeelement zugewandten Seite stattfinden.

In einer sehr günstigen Ausführungsform der vorliegenden Erfindung ist vorgesehen, dass das Funktionselement an der Oberfläche des Hohlraums im Grundkörper festgelegt ist. Durch das Festlegen des Funktionselements an der Oberfläche des Hohlraums im Grundkörper wird in einfacher Weise erreicht, dass der Aktivierungsprozess, der notwendig ist, um das aktivierbare Funktionsmittel von einem ersten Zustand in einen zweiten Zustand zu überführen, in definierter Weise ausführbar ist.

Hierzu kann beispielsweise vorgesehen sein, dass an der Oberfläche des Hohlraums im Grundkörper eine zerbrechbare Ampulle angeordnet ist, in der eine chemische Zusammensetzung enthalten ist, die nach Zerbrechen dieser Ampulle im Hohlraum freigesetzt wird und damit das Volumen des Hohlraums beispielsweise durch Reaktion mit einem darin befindlichen Stoff vergrößert.

In einer bevorzugten Weise ist der Aktvierungsprozess zur Überführung des im Hohlraum enthaltenen aktivierbaren Funktionsmittels in den zweiten Zustand ein Schlag- und / oder ein Druck- und / oder eine Stromzuleitung und / oder eine Beaufschlagung mit Mikrowellenstrahlung und / oder eine Beaufschlagung mit Ultraschallwellen.

In sehr vorteilhafter Weise kann vorgesehen sein, dass als Funktionsmittel ein Isocyanat und ein Polyol, das einen Anteil Wasser aufweist einsetzbar sind. Hierzu ist eine Ampulle mit Polyol und Wasser vorgesehen, die bei der Aktivierung - beispielsweise durch Schlag oder Druck auf ein als Vorsprung am Dichtungselement ausgebildetes Element, das die Form eines Stabes aufweist und auf die Ampulle einwirken kann - beschädigt, zerstört oder zumindest geöffnet wird, so dass sich das Isocyanat und das wasserhaltige Polyol vermischen. Aus diesen Stoffen bildet sich ein Polyurethanschaum, der ein größeres Volumen einnimmt, als die Ausgangsstoffe. Nach Aushärten des Polyurethanschaums wird das vergrößerte Volumen dauerhaft aufrechterhalten.

Im vorliegenden Erfindungszusammenhang bilden die Ampulle mit dem wasserhaltigen Polyol und das Isocyanat das Funktionsmittel.

Ganz besonders bevorzugt ist in diesem Zusammenhang, wenn vorgesehen ist, dass eine Ampulle, die im Hohlraum des Grundkörpers so angeordnet ist, dass ein Aktivierungsvorsprung beim Einschlagen mit einem Werkzeug in den Hohlraum diese beschädigt, zerstört oder zumindest öffnet, so dass deren Inhalt sich mit dem im Hohlraum befindlichen weiteren Funktionsmittel vermischt. Hierzu ist die Ampulle im Hohlraum derartig angeordnet und an der Oberfläche fixiert, dass der Aktivierungsvorsprung beim Einschlagen mit einem Werkzeug in den Hohlraum diese mit Sicherheit beschädigt und deren Inhalt freisetzt.

Durch das Vorsehen, dass das Dichtungselement derart ausgestaltet ist, dass das Funktionsmittel an der Oberfläche des Hohlraums im Grundkörper festgelegt ist, kann die Aktivierung in definierter Weise vorgenommen werden, weil dadurch der Ort des Funktionsmittels im Hohlraum vorgegeben ist, so dass die Aktivierung genau dort wirksam werden kann.

In einer anderen Ausführung ist vorgesehen dass eine Patrone mit einer komprimierten Gas- / Schaummischung, die nach Freisetzung aushärtet, das Funktionsmittel bildet. Auch hier kann die Aktivierung durch einen Schlag mit einem Werkzeug vorgenommen werden, durch die die Patrone ihren Inhalt freisetzt. Nach Aushärten der Gas- / Schaummischung wird das vergrößerte Volumen dauerhaft aufrechterhalten.

In einer weiteren Ausführung kann als Funktionsmittel ein quellfähiges Polymermaterial vorgesehen sein, das unter Wasserzutritt aufquillt, wie beispielsweise ein modifiziertes Superabsorbergel. Dieses reagiert mit Wasser, das in einer Ampulle aufgenommen ist, die durch Aktivierung in Form eines Schlages oder Druckes mit einem Werkzeug freigesetzt wird.

Auch ein in der Wärme sich zersetzendes Material, das mittels eines bestromten Heizdrahts ein Gas und eine Matrix bildet, ist als Funktionsmittel geeignet. Hierzu ist am Grundkörper eine Steckeranordnung vorgesehen, die es ermöglicht, den Heizdraht zu bestromen, wodurch das Funktionsmittel erwärmt wird, sich dabei zersetzt und ein Gas und eine aushärtende Matrix bildet. Hierzu ist eine Vorrichtung notwendig, die auf der Baustelle den dazu notwendigen Strom zur Verfügung stellt.

In einer anderen Ausführungsform ist das Funktionsmittel eine unter dem Einfluss von Mikrowellenstrahlung sich umwandelnde Materialzusammensetzung, die ihr Volumen vergrößert. Hierzu ist eine Vorrichtung notwendig, die auf der Baustelle die dazu notwendige Mikrowellenstrahlung zur Verfügung stellt.

Ebenfalls als Funktionsmittel ist eine durch Einwirkung von Ultraschall unter Volumenvergrößerung sich umwandelnde Zusammensetzung geeignet. Hierzu ist eine Vorrichtung notwendig, die auf der Baustelle den dazu notwendigen Ultraschall zur Verfügung stellt.

Durch die Aktivierungsprozesse, wie vorstehend ausgeführt, gelingt es, das im Hohlraum des Grundkörpers enthaltene aktivierbare Funktionsmittel von einem ersten Zustand in einen zweiten Zustand zu überführen. Hierbei verändert sich das Volumen des Hohlraums, das während des ersten Zustands des Funktionsmittels V1 beträgt und wird größer. Die Volumenvergrößerung findet ein Ende, wenn das Volumen des Hohlraums während des zweiten Zustands des Funktionsmittel V2 beträgt.

Dadurch verändert der Grundkörper zumindest teilweise sein Volumen, wodurch sich eine Dichtwirkung wenigstens zwischen dem Grundkörper und dem Fluidleit- oder -aufnahmeelement einstellt, indem wenigstens ein Abschnitt des Grundkörpers mit dem Fluidleit- oder -aufnahmeelement in Kontakt kommt.

Im Rahmen der vorliegenden Erfindung hat es sich als sehr vorteilhaft herausgestellt, wenn der Grundkörper wenigstens eine Dichtlippe aufweist, die zu dem Fluidleit- oder -aufnahmeelement hin orientiert ist.

Durch das Vorsehen wenigstens einer Dichtlippe am Grundkörper, die zu dem Fluidleit- oder -aufnahmeelement hin orientiert ist, gelingt es in einfacher Weise eine fluiddichte Anlage des Dichtungselements an dem Fluidleit- oder -aufnahmeelement zu schaffen, wenn nach dem Aktivierungsprozess der Grundkörper zumindest teilweise sein Volumen vergrößert hat. Je nach den herrschenden Notwendigkeiten kann die Anzahl der Dichtlippen auch größer als eins sein, bevorzugt sind dabei Ausgestaltungen des Dichtungselements mit zwei, drei, vier, fünf, sechs oder mehr Dichtlippen.

Das Dichtungselement der vorliegenden Erfindung ist dann in besonders günstiger Weise ausgebildet, wenn vorgesehen ist, dass dieses ringförmig oder scheibenförmig oder stopfenförmig oder kissenförmig oder eckig, insbesondere vieleckig, ausgebildet ist.

Ein Dichtungselement der vorgenannten Formen ist in besonders günstiger Weise geeignet, eine Dichtwirkung zu entfalten und sich an unterschiedliche Ausgestaltungen und Abmessungen von Fluidleit- oder -aufnahmeelementen anzupassen.

Eine günstige Verbesserung der vorliegenden Erfindung liegt dann vor, wenn vorgesehen ist, dass am Grundkörper ein Dichtungsmittel angeordnet ist, das unter Wasserzutritt aufquillt. Ein solches unter Wasserzutritt aufquellendes Dichtungsmittel sorgt dafür, dass geringste Leckagen durch den Quellvorgang, der mit einer Volumenvergrößerung des Dichtungsmittels einhergeht, sicher gestoppt werden.

Hierdurch ergibt sich eine weitere Verbesserung des erfindungsgemäßen Dichtungselements.

In einer weiteren günstigen Ausbildungsform der vorliegenden Erfindung ist vorgesehen, dass das Dichtungselement einen Anschlag am Grundkörper aufweist, bis zu dem das Fluidleit- oder -aufnahmeelement auf diesen auf- oder in diesen einschiebbar ist.

Durch das Vorsehen eines Anschlages am Grundkörper, der das Auf- bzw. Einschieben des Fluidleit- oder -aufnahmeelements begrenzt, kann ein definierter Sitz des Dichtungselements am Fluidleit- oder -aufnahmeelement vorgegeben werden. Dadurch wird nach Aktivierung des aktivierbaren Funktionsmittels ein richtiger Sitz und damit eine hohe Fluiddichtheit in einfacher Weise erreicht.

Die Lösung der Aufgabe, eine Verbindungsvorrichtung anzugeben, erfolgt gemäß Anspruch 9. Es wurde im Rahmen der vorliegenden Erfindung erkannt, dass eine Verbindungsvorrichtung dann in sehr vorteilhafter Weise ausgestaltbar ist, wenn diese wenigstens ein Dichtungselement gemäß vorstehender Beschreibung umfasst.

Eine solche Verbindungsvorrichtung kann in einfacher Weise angewendet werden, ist sicher hinsichtlich der Verbindung der Fluidleit- oder -aufnahmeelemente, weist eine hohe Dichtigkeit auf, ist einfach aufgebaut und kostengünstig bereitstellbar.

Die Lösung der Aufgabe, ein Rohrsystem mit einer Verbindungsvorrichtung bereitzustellen, erfolgt gemäß Anspruch 10.

Ein solches Rohrsystem ist dann in vorteilhafter Weise ausgeführt, wenn es wenigstens eine Verbindungsvorrichtung zur fluiddichten Verbindung eines ersten Fluidleit- oder -aufnahmeelements und eines zweiten Fluidleit- oder -aufnahmeelements umfasst und wenn die Verbindungsvorrichtung wie vorstehend beschrieben ausgestaltet ist.

Das Dichtungselement, die Verbindungsvorrichtung und das Rohrsystem finden vielfältigen Einsatz. Insbesondere bei der Aufnahme, Leitung, Speicherung und Verteilung von Fluiden, wie Regenwasser oder Schmutz-/Abwasser ist das Dichtungselement, die Verbindungsvorrichtung und das Rohrsystem geeignet, die gestellten Anforderungen hinsichtlich Dichtungsverhalten, chemische Inertheit, Langlebigkeit und Dauerhaftigkeit, minimierten Installationsaufwand, niedrigen Kosten und anderes mehr in vollem Umfang zu erfüllen. Von großem Vorteil ist hierbei, dass das Dichtungselement in einfacher Weise und leicht an dem dafür vorgesehenen Ort installierbar ist und erst dann durch Aktivierung die Dichtungswirkung entfaltet. Hierdurch kann insbesondere unter schwierigen Baustellenbedingungen und bei engen Platzverhältnissen eine einfache, sichere und fehlerfreie Installation und Aktivierung des Dichtungselements vorgenommen werden.

So lassen sich insbesondere Hülsen mit einem oder mit zwei Dichtungselementen ausstatten, um damit in einfacher Weise zwei Rohre miteinander fluiddicht zu verbinden.

Auch kann ein solches Dichtungselement mit Vorteil in einer an einem Rohrende ausgebildeten Muffe aufgenommen sein, um eine fluiddichte Verbindung zum Ende eines zweiten Rohres herzustellen.

Ebenso kann so ein Anschluss an einem Schacht, einem Speicher oder einem Wassereinlauf geschaffen werden, indem an entsprechenden Abschnitten des Schachtes, des Speichers bzw. des Wassereinlaufes solche Dichtungselemente angeordnet sind.

Das Dichtungselement der vorliegenden Erfindung kann in einfacher Weise durch einen schichtweisen Aufbau hergestellt werden, wobei der Hohlraum erzeugt und mit dem Funktionsmittel versehen werden kann. Die einzelnen Schichten können beispielsweise durch Verkleben, durch Verschweißen oder durch einen Vulkanisationsprozess miteinander verbunden sein. Ein solches Dichtungselement ist dadurch einfach und kostengünstig bereitstellbar, es weist eine hohe Maßhaltigkeit auf. Bei der Lagerung und beim Transport sind entsprechende Vorkehrungen zu treffen, dass nicht unbeabsichtigt die Aktivierung des Funktionsmittels ausgelöst wird. Dies kann durch eine Verpackung realisiert werden, die eine entsprechend Schutzfunktion umfasst.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Fig. dargestellt und werden in der nachfolgenden Beschreibung näher erläutert, wobei sich gleiche Bezugszeichen auf gleiche oder funktional gleiche oder ähnliche Bauteile beziehen.

Die Erfindung wird anhand der beigefügten Figuren näher erläutert.

Hierzu zeigt:
- Fig. 1: einen schematischen Querschnitt durch eine Verbindungsvorrichtung mit zwei Dichtungselementen, bei denen der Hohlraum jeweils das Volumen V1 aufweist;
- Fig. 2: einen schematischen Querschnitt durch eine Verbindungsvorrichtung mit zwei Dichtungselementen, bei denen die Hohlräume die Volumina V2' und V2" aufweisen;
- Fig. 3: eine schematische geschnittene seitliche Schrägansicht einer Verbindungsvorrichtung mit zwei Dichtungselementen, bei denen der Hohlraum jeweils das Volumen V1 aufweist;
- Fig. 4: eine schematische geschnittene seitliche Schrägansicht einer Verbindungsvorrichtung mit zwei Dichtungselementen, bei denen die Hohlräume die Volumina V2' und V2" aufweisen.

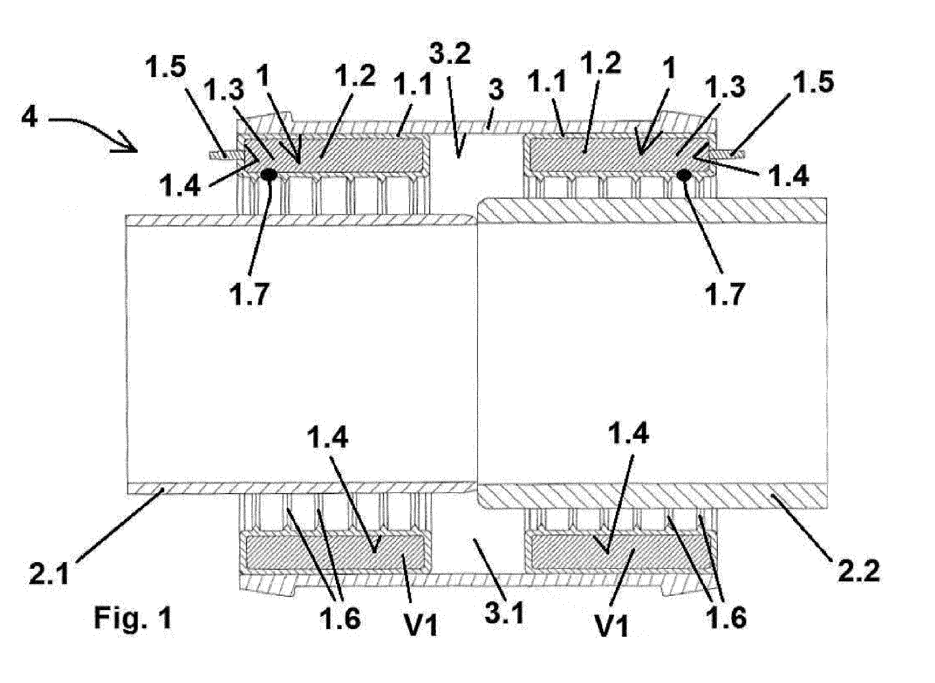

In Fig. 1 ist in einer schematischen Querschnittsansicht eine Verbindungsvorrichtung 4 mit zwei Dichtungselementen 1, 1 gezeigt. Die Dichtungselemente 1, 1, die ringförmig ausgeformt sind, sind in einer Hülse 3, die etwa hohlzylinderförmig ausgebildet ist, aufgenommen.

Die Dichtungselemente 1, 1 sind ringförmig ausgebildet. Die beiden Dichtungselemente 1, 1 sind gleichartig gestaltet, so dass hier im Folgenden nur noch Bezug genommen wird auf ein Dichtungselement 1.

Es versteht sich dennoch, dass die beiden Dichtungselemente 1, 1 auch unterschiedlich gestaltet sein können, also insbesondere - soweit sie ringförmig ausgebildet sind - unterschiedliche Innen- und / oder Außendurchmesser aufweisen, um Fluidleit- oder -aufnahmeelemente unterschiedlichster Art fluiddicht miteinander verbinden zu können.

Das Dichtungselement 1 weist einen Grundkörper 1.1 auf. Der Grundkörper 1.1 ist aus einem elastomeren Material, beispielsweise EPDM, einem Gummi, einem thermoplastischem Elastomeren, oder einer ähnlichem Material, gebildet. Im Grundkörper 1.1 ist ein Hohlraum 1.2 ausgebildet. Der Hohlraum 1.2 im Grundkörper 1.1 des Dichtungselements 1 ist nach außen hin abgeschlossen, d.h. weist nach außen hin keine Verbindung auf.

Im Hohlraum1.2 des Grundkörpers 1.1 ist ein Funktionsmittel 1.3 enthalten. Das Funktionsmittel 1.3 im Hohlraum 1.2 des Grundkörpers 1.1 kann von einem ersten Zustand in einen zweiten Zustand überführt werden. Um dies zu bewerkstelligen ist am Grundkörper 1.1 des Dichtungselements 1 ein Aktivierungsvorsprung 1.5 ausgebildet, der vorliegend als etwa zylindrischer Stift ausgeformt ist. Zur Aktivierung des Funktionsmittels 1.3 im Hohlraum 1.2 des Grundkörpers 1.1 ist der Aktivierungsvorsprung 1.5 mit einem Werkzeug, beispielsweise mit einem Hammer, in den Hohlraum 1.2 des Grundkörpers 1.1 einzuschlagen. In der Fig. 1 ist nicht gezeigt, dass im Hohlraum 1.2 des Grundkörpers 1.1 als Funktionsmittel 1.3 zum einen eine Ampulle angeordnet ist, die eine Polyol, das einen Anteil Wasser enthält, aufgenommen ist. Diese Ampulle ist im Hohlraum 1.2 des Grundkörpers 1.1 so angeordnet, dass der Aktivierungsvorsprung 1.5 beim Einschlagen mit einem Werkzeug in den Hohlraum 1.2 diese beschädigt, zerstört oder zumindest öffnet, so dass der Inhalt sich mit dem im Hohlraum 1.2 befindlichen weiteren Funktionsmittel 1.3 Isocyanat vermischt. Bei der Reaktion von Isocyanat und wasserhaltigen Polyol entsteht eine Polyurethanschaum, der ein größeres Volumen einnimmt, als die Ausgangsmaterialien, wodurch sich das Volumen des Hohlraums 1.2 vergrößert. Dementsprechend ist das Volumen des Hohlraums 1.2 in diesem zweiten Zustand des Funktionsmittels 1.3 dann V2' bzw. V2", wobei V2' und V2" größer als V1 ist.

Am Grundkörper 1.1 des Dichtungselements 1 sind Dichtlippen 1.6 ausgebildet, die auf die zu verbindenden Fluidleit- oder -aufnahmeelemente 2.1, 2.2 zuweisen. Im vorliegenden Fall sind sechs Dichtlippen 1.6 ausgebildet, die sich entlang des gesamten Innenumfangs des etwa ringförmig ausgebildeten Dichtungselements 1 erstrecken.

Der Außenumfang des etwa ringförmig ausgebildeten Dichtungselements 1 ist glatt und liegt an der Innenoberfläche 3.2 der Hülse 3 an. Am Innenumfang des etwa ringförmig ausgebildeten Dichtungselements 1 ist zusätzlich noch ein Dichtungsmittel 1.7 angeordnet, welches unter Hinzutritt von Wasser quillt, d.h. sein Volumen vergrößert. Sollte es zu einer Leckage kommen und Wasser an das Dichtungsmittel 1.7 gelangen, nimmt dieses Wasser auf, quillt auf, vergrößert dabei sein Volumen und dichtet zusätzlich ab.

Bei der in Fig. 1 gezeigten Verbindungsvorrichtung 4 für die Verbindung eines ersten Fluidleit- oder -aufnahmeelements 2.1 mit einem zweiten Fluidleit- oder -aufnahmeelement 2.2 ist vorgesehen, dass das Ende des ersten Fluidleit- oder -aufnahmeelements 2.1, das vorliegend als Rohr ausgebildet ist, etwa bis zur Mitte der Hülse 3 in diese eingeführt ist.

Entsprechend ist das zweite Fluidleit- oder -aufnahmeelement 2.2, das vorliegend als Rohr ausgebildet ist, ebenfalls bis etwa zur Mitte der Hülse 3 in diese eingeführt. Die beiden Enden der Rohre 2.1, 2.2 stoßen etwa in der Mitte der Hülse 3 stirnseitig aneinander an.

Aus der Fig. 1 ist in einfacher Weise nachvollziehbar, dass das erste Rohr 2.1 anders dimensioniert ist, als das zweite Rohr 2.2. Das erste Rohr 2.1 weist eine wesentlich geringere Wandstärke auf, als das zweite Rohr 2.2.

Das erste Rohr 2.1 weist einen kleineren Außendurchmesser auf, als das zweite Rohr 2.2. Die Innendurchmesser der beiden Rohre 2.1, 2.2 unterscheiden sich nur sehr wenig und sind annähernd gleich.

Der Hohlraum 1.2 im Grundkörper 1.1 des Dichtungselement 1 weist in diesem ersten Zustand des Funktionsmittels 1.3 das Volumen V1 auf.

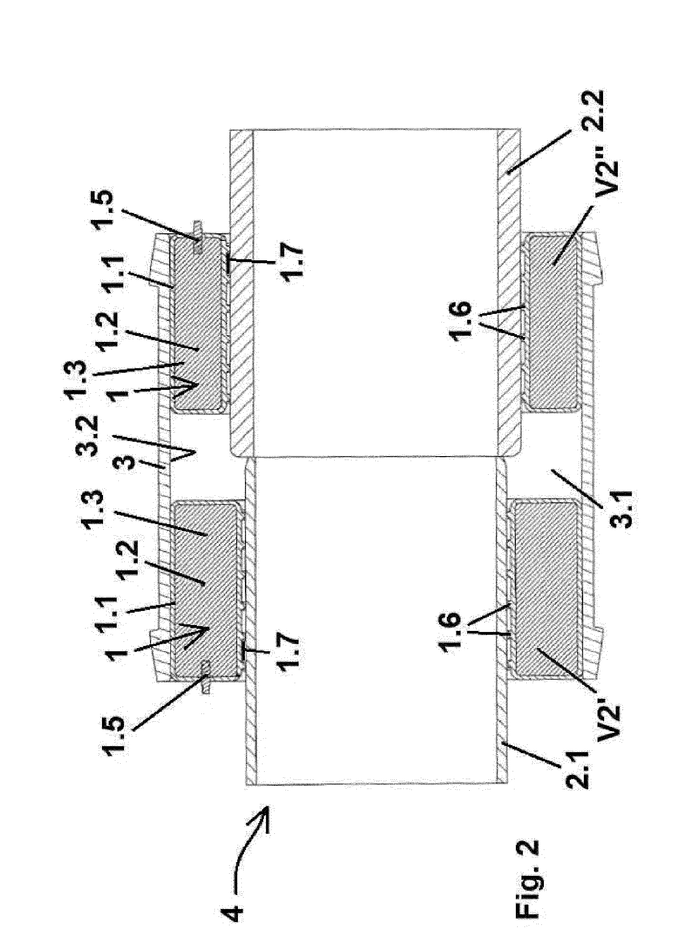

In Fig. 2 ist in einem schematischen Querschnitt die Verbindungsvorrichtung 4 mit zwei Dichtungselementen 1, 1, bei denen die Hohlräume die Volumina V2' und V2" aufweisen, gezeigt.

Die Bezugszeichen entsprechen denen aus Fig. 1.

Durch Einschlagen des Aktivierungsvorsprungs 1.5 in den Hohlraum 1.2 im Grundkörper 1.1 des Dichtungselements 1 ist das im Hohlraum 1.2 befindliche Funktionsmittel 1.3 aktiviert worden. Bei der Aktivierung ist es vom ersten Zustand in einen zweiten Zustand übergegangen. Der zweite Zustand des Funktionsmittels 1.3 ist damit verbunden, dass sich das Volumen des Hohlraums 1.2 vergrößert. Dementsprechend ist das Volumen des Hohlraums 1.2 in diesem zweiten Zustand des Funktionsmittels 1.3 nun V2' bzw. V2", wobei V2' und V2" größer als V1 ist und V2' größer als V2" ist.

Hierzu eignet sich eine Ampulle mit wasserhaltigen Polyol, die im Hohlraum 1.2 des Grundkörpers 1.1 so angeordnet ist, dass der Aktivierungsvorsprung 1.5 beim Einschlagen mit einem Werkzeug in den Hohlraum 1.2 diese beschädigt, zerstört oder zumindest öffnet, so dass der Inhalt sich mit dem im Hohlraum 1.2 befindlichen weiteren Funktionsmittel 1.3 Isocyanat vermischt. Bei der Reaktion von Isocyanat und wasserhaltigen Polyol entsteht ein aushärtender Polyurethanschaum, der ein größeres Volumen einnimmt, als die Ausgangsmaterialien, wodurch sich das Volumen des Hohlraums 1.2 vergrößert.

Durch die Vergrößerung des Hohlraums 1.2 des Grundkörpers 1.1 hat sich der Grundkörper 1.1 zumindest abschnittsweise ausgedehnt. Da das Dichtungselement 1 in der Hülse 3 aufgenommen ist und sich an der Innenoberfläche 3.2 der Hülse 3 abstützt, wirkt die Volumenvergrößerung des Hohlraums 1.2 in radialer Richtung auf die Achsen der Rohre 2.1, 2.2 derart, dass die Dichtlippen 1.6 nun an die Außenoberfläche des ersten Rohres 2.1 und des zweiten Rohres 2.2 angepresst werden. Hierbei entfaltet sich die Dichtwirkung des Dichtungselements 1 in Bezug auf das erste Rohr 2.1 und das zweite Rohr 2.2.

Aus der Fig. 2 ist ohne weiteres zu erkennen, dass eine Art eines Dichtungselements 1 geeignet ist, unterschiedlich große Rohre 2.1, 2.2 in der Verbindungsvorrichtung 4 fluiddicht miteinander zu verbinden. Da das Dichtungselement 1 etwa ringförmig ausgebildet ist, ergibt sich bei den zylinderförmig ausgebildeten Rohren 2.1, 2.2 beim Ausdehnen des Hohlraums 1.2 eine Zentrierung bzgl. ihrer Achsen.

Da im vorliegenden Fall die Innendurchmesser der beiden Rohre 2.1, 2.2 in etwa gleich sind, gelingt es, die beiden Rohre 2.1, 2.2 ohne einen wesentlichen Versatz fluiddicht miteinander zu verbinden, was große Vorteile beim Leiten eines Fluids durch die Verbindungsvorrichtung mit sich bringt, da dadurch der Fluss des Fluids am Übergang der beiden Rohre 2.1, 2.2 nicht behindert wird.

Zusätzlich zu den Dichtlippen 1.6 wirkt auch das Dichtungsmittel 1.7 abdichtend. Sollte dieses Dichtmittel 1.7 durch eine geringe Leckage Feuchtigkeit aufnehmen können, quillt dieses, vergrößert auf diese Weise sein Volumen, und wirkt zusätzlich abdichtend.

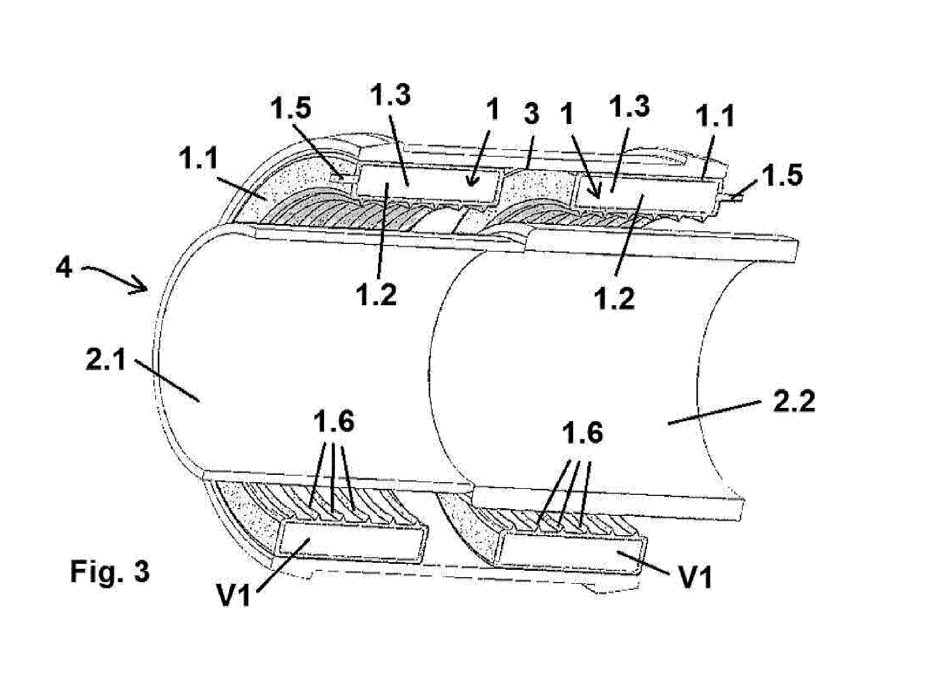

In Fig. 3 ist in einer schematischen geschnittenen seitlichen Schrägansicht die Verbindungsvorrichtung 4 mit zwei Dichtungselementen 1, 1, bei denen der Hohlraum 1.2 das Volumen V1 aufweist gemäß Fig. 1 dargestellt.

Die Bezugszeichen entsprechen denen aus Fig. 1.

In der Fig. 3 ist insbesondere zu erkennen, dass sich das Dichtungselement 1, das etwa ringförmig ausgebildet ist, entlang seines gesamten Umfangs an der Innenoberfläche 3.2 der Hülse 3 anliegt und sich dort abstützen kann.

Die Dichtlippen 1.6, die jeweils in einer Anzahl von sechs Stück ausgebildet sind, sind entlang des gesamten Innenumfangs des Grundkörpers 1.1 ausgebildet.

Die beiden Aktivierungsvorsprünge 1.5, 1.5 sind zur Aktivierung des im Hohlraum 1.2 aufgenommenen Funktionsmittels 1.3 leicht zugänglich, um diese mit einem Werkzeug in den Hohlraum 1.2 einzuschlagen, wenn die Aktivierung des Funktionsmittel 1.3 dies erfordert. Der Hohlraum 1.2 weist das Volumen V1 auf.

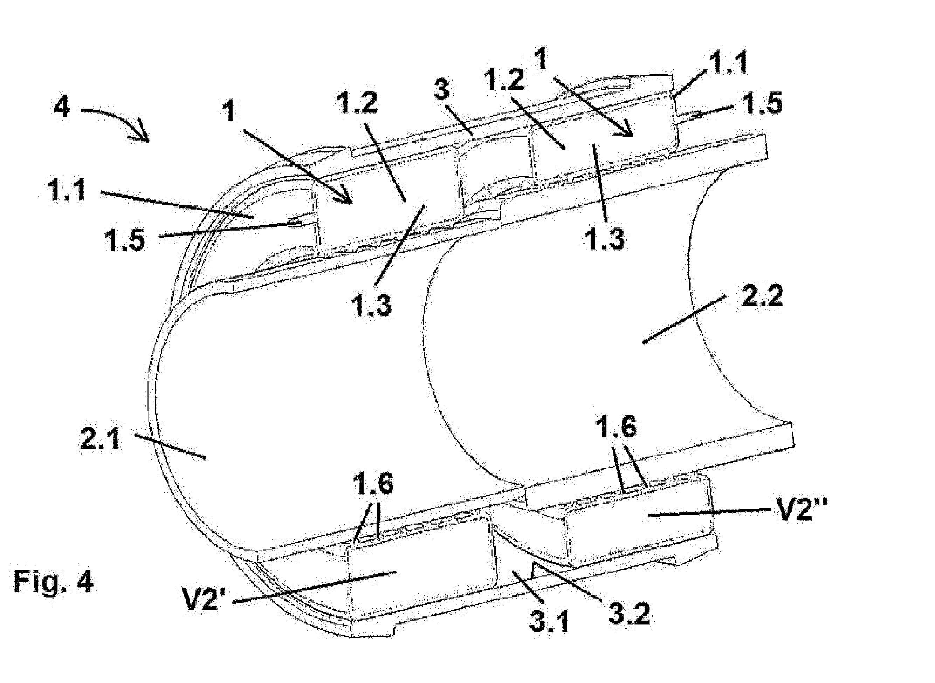

In Fig. 4 ist in einer schematischen geschnitten seitlichen Schrägansicht die Verbindungsvorrichtung 4 mit zwei Dichtungselementen 1, 1, bei denen die Hohlräume die Volumina V2' und V2" aufweisen gemäß Fig. 2 gezeigt.

Die Bezugszeichen entsprechen denen aus Fig. 1.

Nach Aktivierung des Funktionsmittels 1.3 im Hohlraum 1.2 des Grundkörpers 1.1 durch Einschlagen des Aktivierungsvorsprungs 1.5 in den Hohlraum 1.2 haben sich die Hohlräume 1.2, 1.2 auf die Volumina V2' bzw. V2" vergrößert. Hierbei kommen die Dichtlippen 1.6 mit der Oberfläche des ersten Rohres 2.1 bzw. des zweiten Rohres 2.2 in Berührung und schaffen so die fluiddichte Verbindung der beiden Rohre 2.1, 2.2.

Die Volumina der Hohlräume betragen nun V2' und V2". Im vorliegenden Fall ist das Volumen V2' größer als das Volumen V2". Es ergibt sich daher eine durch das kleinere Volumen V2" hervorgerufene größere Kompression des Dichtungselements 1 auf das Rohr 2.2, als die durch das größere Volumen V2'auf das Rohr 2.1 bewirkte Kompression.

Es ist leicht zu erkennen, dass die Maßunterschiede der beiden Rohre 2.1, 2.2 durch unterschiedliche Volumina V2' und V2" der Hohlräume 1.2 der beiden Grundkörper 1.1 ausgeglichen werden. Der Freiraum 3.1 an der Stoßstelle der beiden Rohr 2.1, 2.2 in der Hülse 3 ist dadurch abgedichtet, dass sich die Außenseiten der beiden ringförmig ausgebildeten Dichtungselemente 1, 1 an der Innenoberfläche 3.2 der Hülse 3 anlegen und durch den expandierten Hohlraum 1.2 an diese Innenoberfläche gedrückt werden.

Es ist leicht nachvollziehbar, dass anstelle von zwei Dichtungselementen 1, 1, wie im vorstehenden Ausführungsbeispiel detailliert diskutiert, auch nur ein Dichtungselement 1 oder ein Dichtungselement, das zwei Abschnitte mit je einem Hohlraum aufweist, wobei die zwei Abschnitte durch einen Steg verbunden sind, oder ein hinsichtlich seiner Maße an sehr unterschiedliche Rohrdurchmesser angepasstes Dichtungselement zum Einsatz kommen kann, ohne dass dies hier näher ausgeführt ist.

Auch kann - was hier nicht explizit gezeigt ist - die Hülse an ihren beiden Enden, in die die Fluidleit- oder -aufnahmeelemente einsteckbar sind, unterschiedliche Formen, oder für den Fall, dass deren Querschnitt rund ausgebildet ist, unterschiedliche Durchmesser aufweisen, um je nach den auszuführenden Verbindungen unterschiedlich bemessene Fluidleit- oder -aufnahmeelemente aufzunehmen.

### Bezugszeichenliste

- 1: Dichtungselement
- 1.1: Grundkörper
- 1.2: Hohlraum
- 1.3: Funktionsmittel
- 1.4: Oberfläche
- 1.5: Aktivierungsvorsprung
- 1.6: Dichtlippe
- 1.7: Dichtungsmittel
- 2.1: erstes Fluidleit- oder -aufnahmeelement
- 2.2: zweites Fluidleit- oder -aufnahmeelement
- 3: Hülse
- 3.1: Freiraum
- 3.2: Innenoberfläche
- 4: Verbindungsvorrichtung
- V1: Volumen
- V2: Volumen
- V2': Volumen
- V2": Volumen

## Patentansprüche

1. Dichtungselement (1) zur Anordnung an einem Fluidleit- oder -aufnahmeelement (2.1), insbesondere zur Anordnung an einer Verbindungsvorrichtung (4) zur fluiddichten Verbindung eines ersten Fluidleit- oder -aufnahmeelements (2.1) und eines zweiten Fluidleit- oder -aufnahmeelements (2.2), das einen Grundkörper (1.1) mit wenigstens einem Hohlraum (1.2) aufweist, welcher ohne Verbindung nach außen ist, und wobei der Hohlraum (1.2) ein aktivierbares Funktionsmittel (1.3) enthält, das durch einen Aktivierungsprozess von einem ersten Zustand in einem zweiten Zustand überführbar ist, wobei das Volumen des Hohlraums (1.2) während des ersten Zustands des Funktionsmittels (1.3) V1 beträgt, und das Volumen des Hohlraums (1.2) während des zweiten Zustands des Funktionsmittels (1.3) größer als V1 ist und V2 beträgt, so dass der Grundkörper (1.1) zumindest teilweise sein Volumen vergrößert, wodurch sich eine Dichtwirkung wenigstens zwischen dem Grundkörper (1.1) und dem Fluidleit- oder - aufnahmeelement (2.1) einstellt.

2. Dichtungselement (1) nach Anspruch 1, **dadurch gekennzeichnet, dass** zwei Hohlräume (1.2, 1.2) im Grundkörper (1.1) vorgesehen sind, wobei wenigstens ein Hohlraum (1.2) ein aktivierbares Funktionsmittel (1.3) enthält.

3. Dichtungselement (1) nach Anspruch 1 oder 2, **dadurch gekennzeichnet, dass** das Funktionsmittel (1.3) an der Oberfläche (1.4) des Hohlraums (1.2) im Grundkörper (1.1) festgelegt ist.

4. Dichtungselement (1) nach einem der vorangehenden Ansprüche, **dadurch gekennzeichnet**, der Aktivierungsprozess zur Überführung des im Hohlraum (1.2) enthaltenen aktivierbaren Funktionsmittels (1.3) in den zweiten Zustand ein Schlag und / oder ein Druck und / oder eine Stromzuleitung und / oder eine Beaufschlagung mit Mikrowellenstrahlung und / oder eine Beaufschlagung mit Ultraschallwellen ist.

5. Dichtungselement (1) nach einem der vorangehenden Ansprüche, **dadurch gekennzeichnet, dass** der Grundkörper (1.1) wenigstens eine Dichtlippe (1.6) aufweist, die zu dem Fluidleit- oder -aufnahmeelement (2.1) hin orientiert ist.

6. Dichtungselement (1) nach einem der vorangehenden Ansprüche, **dadurch gekennzeichnet, dass** es ringförmig oder scheibenförmig oder stopfenförmig oder kissenförmig oder eckig, insbesondere vieleckig, ausgebildet ist.

7. Dichtungselement (1) nach einem der vorangehenden Ansprüche, **dadurch gekennzeichnet, dass** am Grundkörper (1.1) ein Dichtungsmittel (1.7) angeordnet ist, das unter Wasserzutritt aufquillt.

8. Dichtungselement (1) nach einem der vorangehenden Ansprüche, **dadurch gekennzeichnet, dass** ein Anschlag am Grundkörper (1.1) vorhanden ist, bis zu dem das Fluidleit- oder -aufnahmeelement (2.1) auf diesen auf- oder in diesen einschiebbar ist.

9. Verbindungsvorrichtung (4) mit wenigstens einem Dichtungselement (1) nach einem der Ansprüche 1 bis 8.

10. Rohrsystem mit wenigstens einer Verbindungsvorrichtung (4) zur fluiddichten Verbindung eines ersten Fluidleit- oder -aufnahmeelements (2.1) und eines zweiten Fluidleit- oder -aufnahmeelements (2.2) nach Anspruch 9.
